Europäisches Patentamt

European Patent Office

Office européen des brevets

(11) Veröffentlichungsnummer: **0 431 712 A1**

(12) **EUROPÄISCHE PATENTANMELDUNG**

(21) Anmeldenummer: 90250289.7

(22) Anmeldetag: 22.11.90

(51) Int. Cl.5: **F16T 1/10**

(30) Priorität: 07.12.89 DE 3940775

(43) Veröffentlichungstag der Anmeldung:
12.06.91 Patentblatt 91/24

(84) Benannte Vertragsstaaten:
AT BE CH DE DK ES FR GB GR IT LI LU NL SE

(71) Anmelder: **HACI AYVAZ A.S.**
**Persembe Pazari, Tersane Cad. Zencefil Sok.**
**No. 6**
**80000 Karaköy, Istanbul(TR)**

(72) Erfinder: **Ayvaz, Ohannes, Perseme Pazari**
**Tersane Cad., Zencefil Sok. No. 6**
**80000 Karaköy, Istanbul(TR)**

(74) Vertreter: **Winkler, Andreas, Dr. et al**
**Forrester & Boehmert Widenmayerstrasse 4/I**
**W-8000 München 22(DE)**

(54) **Kondensatableiter.**

(57) Die Erfindung betrifft einen thermisch gesteuerten Kondensatableiter mit einem aus zwei tellerförmigen Wandungsteilen gebildeten Gehäuse, mit einer zwischen diesen angeordneten Membran, die an ihrem Außenrand mit den beiden Wandungsteilen dicht verschweißt ist und mit einem Wandungsteil eine ein Ausdehnungsmedium aufnehmende Kammer bildet, und mit einem zentral an der Membran befestigten, durch eine Bohrung in dem zweiten Wandungsteil mit einem Ventilsitz zusammenwirkenden Verschlußteil.

Erfindungsgemäß ist das Verschlußteil 7 durch Widerstandspreßschweißen zentral mit der Membran 4 und einem Gegenstück 15 verbunden. Das Verschlußteil 7 ist zur Erzielung einer sauberen Schweißstelle speziell für das Widerstandspreßschweißverfahren ausgebildet.

Fig. 1

Xerox Copy Centre

## KONDENSATABLEITER

Die Erfindung betrifft einen Kondensatableiter der im Oberbegriff des Hauptanspruches spezifizierten Art.

Ein solcher Kondensatableiter ist bspw. aus der DE-PS 19 17 585 bekannt. Der dort beschriebene Kondensatableiter besteht im wesentlichen aus einer von einer Membran verschlossenen Kammer, die mit einem sich unter Wärmezufluß ausdehnenden und bei Wärmeentzug zusammenziehenden Medium, das bei Temperaturänderung eine Hubbewegung der Membran verursacht, gefüllt ist. An der Membran zentral angeordnet ist ein Verschlußteil, das mit einem Ventilsitz zusammenwirkt.

Es ist von jeher ein Problem gewesen, das Verschlußteil mit der Membran - ggf. unter Zuhilfenahme eines Gegenstückes - so zu verbinden, daß eine dauerhaft dichte Verbindung gewährleistet ist, und daß die Membran nicht so vorgeschädigt wird, daß ihre Lebensdauer drastisch verkürzt wird.

Bei dem aus der DE-PS 19 17 585 bekanntgewordenen Kondensatableiter ist das Verschlußteil bspw. mit der Membran und einem Gegenstück durch einen Niet verbunden. Die Verbindungsweise durch Nieten ist insofern nachteilig, als Undichtigkeiten zu befürchten sind. Eine Undichtigkeit führt zum Auslaufen des Ausdehnungsmediums und damit zu einem Unbrauchbarwerden des Kondensatableiters.

Es sind daher - bspw. aus der FR-PS 858 960 - Kondensatableiter bekanntgeworden, bei denen der zentrale Niet an seinem Umfang mit der Membran bzw. bei einer mehrlamelligen Membran mit den einzelnen Lamellen der Membran zusätzlich verschweißt ist. Die Kombination von Nieten und Schweißen ist fertigungstechnisch sehr aufwendig.

Aus der DE-PS 26 30 038 ist ein Kondensatableiter der gattungsgemäßen Art mit einer aus mehreren Lamellen zusammengesetzten Membrane bekanntgeworden, bei dem das Verschlußteil membranseitig zentral eine Ringwulst aufweist und eine Klemmscheibe (ein Gegenstück) vorgesehen ist. Die Klemmscheibe sowie die Membranlamellen weisen dabei eine Zentralbohrung auf und sind in ihrem an die Zentralbohrung angrenzenden Stirnflächenbereich zur Außenumfangsfläche des Ringwulstes komplemetär geformt. Die Membranlamellen sind zwischen dem Verschlußteil und der Klemmscheibe (dem Gegenstück) fest eingeklemmt und das Veschlußteil, die Klemmscheibe sowie dem Membranlamellen sind an ihren benachbarten Bohrungsrändern respektive am Wulstrücken fest und dicht miteinander verscheißt.

Diese Verbindungsart ist ebenfalls fertigungstechnisch relativ aufwendig, da - sei es durch spanende Arbeitsweise, sei es durch Stanzen - mehrere Bohrungen hergestellt werden müssen.

Eine prinzipiell ähnliche Befestigungsart ist aus der DE-PS 31 24 459 bekannt, bei der die Bohrung im Verschlußteil eine Hinterschneidung aufweist, so daß die Membran im Bereich der Schweißzone nicht verformt zu werden braucht.

Allen bekannten Kondensatableitern gemeinsam ist, daß die Verbindung zwischen dem Verschlußteil und der - ggf. aus mehreren Lamellen aufgebauten - Membran fertigungstechnisch sehr aufwendig ist.

Der Erfindung liegt daher die Aufgabe zugrunde, einen Kondensatableiter der gattungsgemäßen Art so zu verbessern, daß eine einfache und zuverlässige Verbindung von Membran und Verschlußteil sowie einem Gegenstück ermöglicht wird.

Die Aufgabe wird bei einem gattungsgemäßen Kondensatableiter erfindungsgemäß durch die Merkmale des kennzeichnenden Teils des Anspruches 1 gelöst.

Durch die erfindungsgemäße Ausbildung des Verschlußteiles, der Membran und des Gegenstückes werden auf äußerst einfache Art und Weise Berührungsflächen geschaffen, die sich vorzüglich für eine Verbindung durch das Widerstandspreßschweißen eignen.

Weitere bevorzugte Ausführungsformen der Erfindung sind in den Unteransprüchen beschrieben.

Insbesondere kann gemäß Unteranspruch 4 vorgesehen sein, daß die Ringfläche des Gegenstückes und der annähernd kegelförmige Abschnitt des Verschlußteiles die Membran zwischen sich einklemmt, so daß durch den Hub der Membran verursachte Biegespannungen von der Schweißzone, die einer Gefügeänderung unterworfen ist, ferngehalten werden.

Bei einer weiteren bevorzugten Ausführungsform kann darüber hinaus ein als Hubbegrenzer für die Membran dienendes schelbenförmiges Bauteil vorgesehen sein.

Die Erfindung wird im folgenden anhand der Zeichnung näher erläutert. In der Zeichnung zeigen:

Fig. 1    ein Ausführungsbeispiel eines erfindungsgemäßen Kondensatableiters, und

Fig. 2    einen Kondensatableiter gemäß der Erfindung mit einer zusätzlichen Hubbegrenzerscheibe.

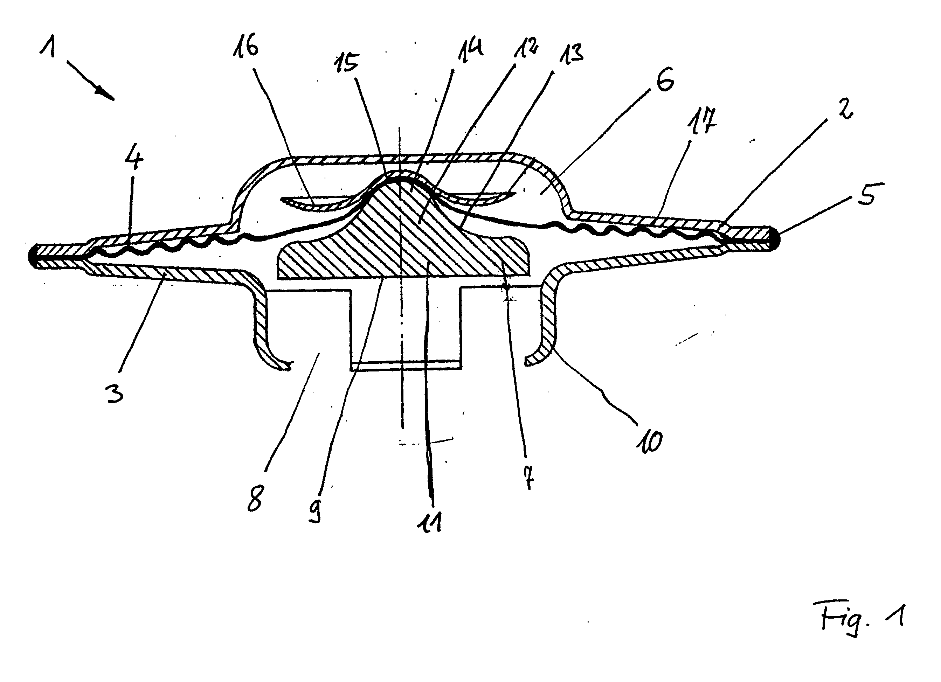

Ein erfindungsgemäßer Kondensatableiter 1, wie er in Fig. 1 dargestellt ist, besteht aus zwei tellerförmigen Wandungsteilen 2 und 3, zwischen denen eine Membran 4 eingespannt ist. Die Wandungsteile 2 und 3 sowie die Membran 4 sind längs ihres kreisförmigen Umfangs 5 miteinander verschweißt. Zwischen der Membran 4 und dem oberen Wandungsteil 2 wird eine Kammer 6 gebildet, die mit einem Ausdehnungsmedium gefüllt ist. Zentral an der Membran 6 befestigt ist ein Verschlußteil 7, das durch eine Öffnung 8 im unteren Wandungsteil 3 mit einem hier nicht dargestellten Ventilsitz zusammenwirkt.

Wird der Kondensatableiter mit Kondensat benetzt, das kühler ist als der normalerweise an dem Kondensatableiter vorbeistreichende Heißdampf, so zieht sich das in der Kammer 6 befindliche Ausdehnungsmedium zusammen, wodurch die Membran 4 und mit ihr das Verschlußteil 7 in die dargestellte Stellung bewegt wird. Eine untere Auflagefläche 9 des Verschlußteiles 7 wird dann von dem hier nicht dargestellten Ventilsitz abgehoben, woraufhin das Kondensat abfließen kann. Steigt die Temperatur des an dem Kondensatableiter vorbeistreichenden Mediums wieder an, d.h. ist alles Kondensat abgeleitet und ist der Kondensatableiter nur noch von Heißdampf umgeben, so dehnt sich das Ausdehnungsmedium in der Kammer 6 wieder aus, wodurch die Membran 4 und mit ihr das Verschlußteil 7 abwärts bewegt wird, so daß die Anlagefläche 9 des Verschlußteiles 7 auf dem Ventilsitz zu liegen kommt.

Der gesamte Kondensatableiter 1 kann mit fingerartig um einen hier nicht dargestellten Rand des Ventilsitzes greifenden Haltefedern 10 befestigt werden.

Erfindungsgemäß besteht die geometrische Grundform des Verschlußteiles 7 im wesentlichen aus drei Teilkörpern. An die Anlagefläche 9 schließt sich zunächst ein zylinderförmiger Teilkörper 11 an. Dieser geht in einen sich nach oben hin verjüngenden, etwa kegelartigen Rotationskörper 12 über, dessen Hüllkurve 13 konkav ausgebildet sein kann. An diesen schließt sich ein Kugelabschnitt 14 an. Die Membran 4 ist in einem an das Verschlußteil angrenzenden Bereich komplementär zu dieser Kugelkalotte bzw. zu diesem Kugelabschnitt ausgeformt. Das Verschlußteil 7 ist im Bereich des Kugelabschnittes 14 mit der Membran 4 und einem auf der anderen Seite der Membran angeordneten Gegenstück 15 durch Widerstandspreßschweißen verbunden. Das Gegenstück 15 weist eine ringförmig umlaufende Anlagefläche 16 auf, die ggf. auch so weit herabgezogen sein kann, daß die Membran 4 zwischen dieser ringförmigen Anlagefläche 16 und der Umfangsfläche des kegelförmig ausgebildeten Rotationskörpers eingeklemmt wird. Auf diese Art und Weise können Biegespannungen von der Schweißzone, in der eine Gefügeveränderung stattgefunden hat, ferngehalten werden. Die Lebensdauer der Membran 4 wird dadurch wesentlich erhöht.

Die Membran 4 kann selbstverständlich - wie an sich bekannt - aus mehreren einzelnen Lamellen zusammengesetzt sein, die gemeinsam miteinander verschweißt werden.

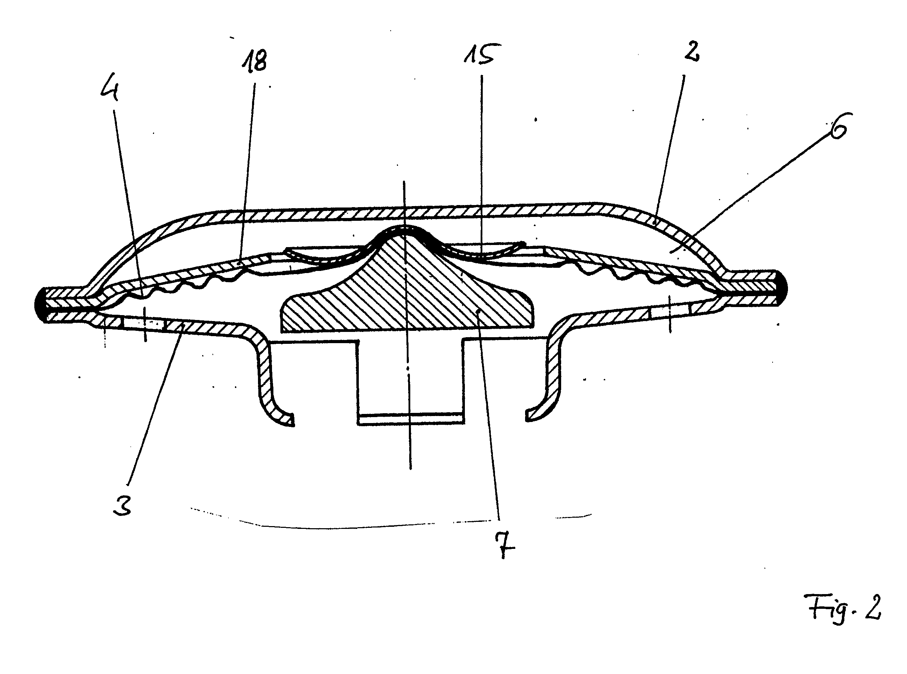

In Fig. 2 dargestellt ist eine Ausführungsform des erfindungsgemäßen Kondensatableiters, bei dem die Kammer 6 durch veränderte Gestaltung des oberen tellerförmigen Wandungsteiles 2 größer ausgebildet ist, als bei dem in Fig. 1 dargestellten Ausführungsbeispiel.

Bei dem in Fig. 1 dargestellten Ausführungsbeispiel wird der Hub der oben ausweichenden Membran durch umlaufende Anlageflächen 17 des oberen Wandungsteiles 2 begrenzt. Bei dem in Fig. 2 dargestellten Ausführungsbeispiel ist eine zusätzliche Scheibe 18 vorgesehen, die als Hubbegrenzer fungiert und eine Beschädigung der Membran 4 aufgrund eines zu großen Hubes verhindert.

Durch die erfindungsgemäße Ausgestaltung eines Kondensatableiters mit einem mittels Widerstandspreßschweißen mit der Membran verbundenen, speziell hierfür ausgestalteten Verschlußteiles werden die Herstellkosten für einen solchen Kondensatableiter reduziert, ohne daß die Zuverlässigkeit und Lebensdauer desselben herabgesetzt würde.

# BEZUGSZEICHENLISTE

## (LIST OF REFERENCE NUMERALS)

| 1 | Kondensatableiter | 1 |
| 2 | Wandungsteil | 2 |
| 3 | Wandungsteil | 3 |
| 4 | Membran | 4 |
| 5 | Umfang, Rand | 5 |
| 6 | Kammer | 6 |
| 7 | Verschlußteil | 7 |
| 8 | Öffnung | 8 |
| 9 | Anlagefläche | 9 |
| 10 | Haltefedern | 10 |
| 11 | zylinderförmiger Teilkörper | 11 |
| 12 | kegelförmiger Teilkörper | 12 |
| 13 | Hüllkurve | 13 |
| 14 | Kugelabschnitt | 14 |
| 15 | Gegenstück | 15 |
| 16 | ringförmige Anlagefläche | 16 |
| 17 | Anlagefläche | 17 |
| 18 | (Hubbegrenzer-)Scheibe | 18 |
| 19 | | 19 |
| 20 | | 20 |
| 21 | | 21 |
| 22 | | 22 |
| 23 | | 23 |
| 24 | | 24 |
| 25 | | 25 |
| 26 | | 26 |
| 27 | | 27 |
| 28 | | 28 |
| 29 | | 29 |
| 30 | | 30 |

**Ansprüche**

1. Kondensatableiter mit einem aus zwei tellerförmigen Wandungsteilen gebildeten Gehäuse, mit einer zwischen diesen angeordneten Membran, die an ihrem Außenrand mit den beiden Wandungsteilen dicht verschweißt ist und mit einem Wandungsteil eine ein Ausdehnungsmedium aufzunehmende Kammer bildet, und mit einem zentral an der Membran befestigten, durch eine Öffnung in dem zweiten Wandungsteil mit einem Ventilsitz zusammenwirkenden Verschlußteil, dadurch gekennzeichnet, daß die geometrische Grundform des Verschlußteiles (7) im wesentlichen aus drei Teilkörpern (11, 12, 14) besteht, nämlich aus einem mit dem Ventilsitz zusammenwirkenden, kreiszylinderförmigen Teilkörper (11), einem sich an diesen anschließenden, sich verjüngenden, kegelartigen Rotationskörper (12) und einem daran anschließenden Kugelabschnitt (14), daß die Membran (4) zentral eine mit dem Kugelabschnitt (14) korrespondierende Vertiefung aufweist, daß ein Gegenstück (15) vorhanden ist, das wie die Membran eine mit dem Kugelabschnitt korrespondierende Vertiefung aufweist und daß das Verschlußteil, die Membran und das Gegenstück durch Widerstandspreßschweißen miteinander verbunden sind.

2. Kondensatableiter nach Anspruch 1, dadurch gekennzeichnet, daß die Membran (4) aus mehreren Membranlamellen besteht.

3. Kondensatableiter nach einem der vorhergehenden Ansprüche, dadurch gekennzeichnet, daß das Gegenstück (15) eine ringförmig umlaufende Anlagefläche (16) für die Membran (4) aufweist.

4. Kondensatableiter nach einem der vorhergehenden Ansprüche, dadurch gekennzeichnet, daß das Verschlußteil (7) die Membran (4) zusammen mit der ringförmigen Anlagefläche (16) des Gegenstückes im Bereich seines kegelartigen Rotationskörpers (12) einklemmt.

5. Kondensatableiter nach einem der vorhergehenden Ansprüche, dadurch gekennzeichnet, daß zwischen den beiden Wandungsteilen (2, 3) ein drittes, scheibenförmiges, den Hub der Membran begrenzendes Bauteil (18) angeordnet ist.

Fig. 1

Fig. 2

EP 0 431 712 A1

**Europäisches Patentamt**

# EUROPÄISCHER RECHERCHENBERICHT

Nummer der Anmeldung

## EP 90 25 0289

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.5) |
|---|---|---|---|
| A,D | DE-B-2 630 038 (GESTRA)<br>* das ganze Dokument *<br>– – – | 1 | F<br>16 T 1/10 |
| A | US-A-4 681 256 (DEWHIRST)<br>– – – | | |
| A | FR-A-8 589 16 (RIBES)<br>– – – – – | | |

|  | RECHERCHIERTE SACHGEBIETE (Int. Cl.5) |
|---|---|
|  | F 16 T<br>G 05 D<br>F 16 K |

Der vorliegende Recherchenbericht wurde für alle Patentansprüche erstellt

| Recherchenort | Abschlußdatum der Recherche | Prüfer |
|---|---|---|
| Den Haag | 11 März 91 | VAN GHEEL J.U.M. |

KATEGORIE DER GENANNTEN DOKUMENTE

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur
T : der Erfindung zugrunde liegende Theorien oder Grundsätze

E : älteres Patentdokument, das jedoch erst am oder nach dem Anmeldedatum veröffentlicht worden ist
D : in der Anmeldung angeführtes Dokument
L : aus anderen Gründen angeführtes Dokument

------------------------------------------------
& : Mitglied der gleichen Patentfamilie, übereinstimmendes Dokument